# EUROPÄISCHE PATENTSCHRIFT

(11) **EP 2 760 902 B1**
(45) Veröffentlichungstag und Bekanntmachung des Hinweises auf die Patenterteilung: **08.08.2018**
(21) Anmeldenummer: 12769375.2
(22) Anmeldetag: 27.09.2012
(51) Int. Cl.: C08G 18/10, C08G 18/42, C08G 18/66, C08G 18/76

(54) **HOMOGENE EXTRUDIERTE ARTIKEL AUS THERMOPLASTISCH VERARBEITBAREN POLYURETHANEN AUF BASIS VON POLYESTERDIOLEN AUS BERNSTEINSÄURE UND 1,3 -PROPANDIOL**
HOMOGENEOUS EXTRUDED ARTICLES MADE FROM THERMOPLASTICALLY PROCESSABLE POLYURETHANES BASED ON POLYESTER DIOLS FORMED FROM SUCCINIC ACID AND 1,3-PROPANEDIOL
ARTICLES HOMOGÈNES EXTRUDÉS À PARTIR DE POLYURÉTHANES THERMOPLASTIQUES À BASE DE POLYESTER DIOLS DE L'ACIDE SUCCINIQUE ET DE 1,3-PROPANEDIOL

(30) Priorität: 30.09.2011 DE 102011083813
(43) Veröffentlichungstag der Anmeldung: 06.08.2014
(73) Patentinhaber: Covestro Deutschland AG, 51373 Leverkusen (DE)
(72) Erfinder: BRÄUER, Wolfgang, 51375 Leverkusen (DE); SHEN, Yi, Shanghai 201100 (CN); KAUFHOLD, Wolfgang, 51061 Köln (DE); NEFZGER, Hartmut, 50259 Pulheim (DE)
(74) Vertreter: Levpat
(86) Internationale Anmeldenummer: PCT/EP2012/069076
(87) Internationale Veröffentlichungsnummer: WO 2013/045546

(56) Entgegenhaltungen:
- EP-A1- 2 083 028
- EP-A2- 0 361 082
- EP-A2- 2 392 602
- WO-A1-2008/104541

## Beschreibung

Die vorliegende Erfindung betrifft homogene extrudierte Artikel aus thermoplastisch verarbeitbaren Polyurethanen (TPU) auf Basis von Polyesterdiolen aus Bernsteinsäure und 1,3-Propandiol.

Thermoplastische Polyurethan-Elastomere (TPU) sind seit langem bekannt. Sie sind von technischer Bedeutung aufgrund der Kombination hochwertiger mechanischer Eigenschaften mit den bekannten Vorteilen der kostengünstigen thermoplastischen Verarbeitbarkeit. Durch die Verwendung unterschiedlicher chemischer Aufbaukomponenten läßt sich eine große Variationsbreite mechanischer Eigenschaften erzielen. Eine Übersicht über TPU, ihre Eigenschaften und Anwendungen wird z.B. in Kunststoffe 68 (1978), Seiten 819 bis 825 oder Kautschuk, Gummi, Kunststoffe 35 (1982), Seiten 568 bis 584 gegeben.

TPU werden aus linearen Polyolen, meist Polyester- oder Polyether-Polyolen, organischen Diisocyanaten und kurzkettigen Diolen (Kettenverlängerern) aufgebaut. Zur Beschleunigung der Bildungsreaktion können zusätzlich Katalysatoren zugesetzt werden. Zur Einstellung der Eigenschaften können die Aufbaukomponenten in relativ breiten molaren Verhältnissen variiert werden. Bewährt haben sich molare Verhältnisse von Polyolen zu Kettenverlängerern von 1:1 bis 1:12. Hierdurch ergeben sich Produkte im Bereich von 50 ShoreA bis 75 Shore D.

Die TPU können kontinuierlich oder diskontinuierlich hergestellt werden. Die bekanntesten technischen Herstellverfahren sind das Bandverfahren (GB 1057018 A) und das Extruderverfahren (DE 1964834 A und DE 2059570 A).

Über die Polyole lassen sich eine Vielfalt von Eigenschaftskombinationen gezielt einstellen, wobei gute Mechanikwerte für Elastomere natürlich besonders wichtig sind. Die Verwendung von Polyether-Polyole verleihen TPU besonders gute Hydrolyseeigenschaften. Wenn man gute Mechanikwerte haben will, sind Polyester-Polyole vorteilhaft.

Polyester-Polyole für TPU werden beispielsweise aus Dicarbonsäuren mit 2 bis 12 Kohlenstoffatomen, bevorzugt 4 bis 6 Kohlenstoffatomen, und mehrwertigen Alkoholen wie Glykolen mit 2 bis 10 Kohlenstoffatomen hergestellt, wobei standardmäßig Polyestermolekulargewichte von 500 bis 5000 zum Einsatz kommen. Wie in der EP 175 76 32 A2 auch für TPU aus Polyester-Polyolen beschrieben wird, erhält man mittels einer besonderen Dosierreihenfolge der Monomere TPU, welche besonders homogene Formkörper mit besonders guter Standfestigkeit liefern.

Die WO 2008/104541 A beschreibt die Umsetzung von Bernsteinsäure, welche biologisch durch Fermentation von Kohlenhydraten hergestellt mit mindestens zweifunktionellen Alkoholen zu Polyesteralkoholen. Als zweifunktionelle Alkohole werden Monoethylenglykol, Diethylenglykol, Monopropylenglykol, Dipropylenglykol, 1,4-Butandiol, 1,5-Pentandiol, 1,6-Hexandiol, 2-methyl-1,3-propandiol, 3-Methyl-1,5-pentandiol, Neopentylglykol, Glycerin, Trimethylpropandiol, Pentaerythrit und Sorbitol ausgewählt. Polyesteralkohole basierend auf 1,3-Propandiol werden nicht erwähnt und keine Einschränkungen oder Vorzugsbereiche für das Molekulargewicht der Polyesteralkohole genannt. Es werden auch aus diesen Polyesteralkoholen hergestellte TPU beansprucht. In den Beispielen werden Polyester aus Bernsteinsäure, Adipinsäure und Ethylenglykol und Butandiol mit Molekulargewichten von ca. 1900 beschrieben und zu TPU umgesetzt, welche keine besonderen Eigenschaften und durchschnittliche Mechanik-Werte aufweisen. Die Herstellung von Extrusionsartikeln aus diesen TPU wird nicht beschrieben.

Die WO 2010/031792 A beschreibt Polyurethane auf Basis eines Polyesterdiols mit einer Dicarbonsäure mit einer geraden Anzahl von C-Atomen und einem Diol mit einer ungeraden Anzahl von C-Atomen. Die Dicarbonsäure ist bevorzugt Sebacinsäure und das Diol Propandiol-1,3, wobei beide Polyesterbestandteile auch nicht fossilen Ursprungs sein können. Man erhält transparente thermoplastische Polyurethane mit besonders niedrigem Glaspunkt.. Über die Herstellung von besonders homogenen TPU-Extrusionsartikeln wird nicht berichtet. Es ist auch bekannt, dass TPU mit besonders niedrigem Glaspunkt aufgrund der Phasenseparation keine guten homogenen Extrusionsartikel ergeben.

Sollen nun TPU, welche ganz oder teilweise aus biologisch herstellbaren Komponenten herstellbar sind, für die Herstellung von homogenen Extrusionsartikeln eingesetzt werden, bietet der Stand der Technik dem Fachmann keinen Anhaltspunkt, welches TPU er auswählen soll.

Aufgabe der vorliegenden Erfindung war es daher, Extrusionsartikel zur Verfügung zu stellen, welche sich aus TPU herstellen lassen, welches ganz oder teilweise aus biologisch herstellbaren Komponenten herstellbar ist.

Diese Aufgabe konnte überraschenderweise durch die Verwendung von thermoplastisch verarbeitbaren Polyurethanelastomeren mit einer Härte von 65 bis 95ShoreA, bestimmt nach ISO868, welche erhältlich sind aus den Komponenten
a) ein oder mehrere im Wesentlichen lineare Polyesterdiole mit einer Funktionalität von 1,8 bis 2,2,
b) ein oder mehrere organische Diisocyanate,
c) eine oder mehrere Diole mit Molekulargewichten von 60 bis 350 g/mol (im weiteren auch "Kettenverlängerer" genannt),
wobei ein molares NCO : OH-Verhältnis von 0,9 : 1 bis 1,1 : 1 eingestellt wird,
und dadurch gekennzeichnet sind, dass die im Wesentlichen linearen Polyesterdiole a) ganz oder teilweise aus Bernsteinsäure und 1,3-Propandiol enthalten und ein mittleres Molekulargewicht von 750 bis 1800 g/mol aufweisen, gelöst werden.

Als "molares NCO : OH" Verhältnis wird hierbei das Verhältnis von Isocyanat - Gruppen b) zu den gegenüber Isocyanatgruppen reaktiven Hydroxy-Gruppen aus a) und c) bezeichnet.

Der Ausdruck "mittleres Molekulargewicht" bezieht sich hier und im weiteren auf das zahlenmittlere Molekulargewicht Mₙ.

Die Härte der verwendeten thermoplastisch verarbeitbaren Polyurethanelastomere beträgt 65 bis 95 ShoreA, bevorzugt 75 bis 95 Shore A und besonders bevorzugt 80 bis 95 Shore A. Die Shorehärte wird nach ISO868 bestimmt.

Als organische Diisocyanate b) kommen beispielsweise aliphatische, cycloaliphatische, araliphatische, heterocyclische und aromatische Diisocyanate in Betracht, wie sie z.B. in Justus Liebigs Annalen der Chemie, 562, Seiten 75 bis 136, beschrieben werden.

Im Einzelnen seien beispielhaft genannt: aliphatische Diisocyanate, wie Hexamethylendiisocyanat, cycloaliphatische Diisocyanate, wie Isophorondiisocyanat, 1,4-Cyclohexan-diisocyanat, 1-Methyl-2,4-cyclohexan-diisocyanat und 1-Methyl-2,6-cyclohexan-diisocyanat sowie die entsprechenden Isomerengemische, 4,4'- Dicyclohexylmethandiisocyanat, 2,4'- Dicyclohexylmethandiisocyanat und 2,2'-Dicyclohexylmethandiisocyanat sowie die entsprechenden Isomerengemische, aromatische Diisocyanate, wie 2,4-Toluylendiisocyanat, Gemische aus 2,4-Toluylendiisocyanat und 2,6-Toluylendiisocyanat, 4,4'-Diphenylmethandiisocyanat, 2,4'-Diphenylmethandiisocyanat und 2,2'-Diphenylmethandiisocyanat, Gemische aus 2,4'-Diphenylmethandiisocyanat und 4,4'-Diphenylmethandiisocyanat, urethanmodifizierte flüssige 4,4'-Diphenylmethandiisocyanate oder 2,4'-Diphenylmethandiisocyanate, 4,4'-Diisocyanatodiphenylethan-(1,2) und 1,5-Naphthylendiisocyanat. Vorzugsweise verwendet werden 1,6-Hexamethylendiisocyanat, 1,4-Cyclohexandiisocyanat, Isophorondiisocyanat, Dicyclohexylmethandiisocyanat, Diphenylmethandiisocyanat-Isomerengemische mit einem 4,4'-Diphenylmethandiisocyanatg ehalt von mehr als 96 Gew.-%, 4,4'-Diphenylmethandiisocyanat und 1,5-Naphthylendiisocyanat. Die genannten Diisocyanate können einzeln oder in Form von Mischungen untereinander zur Anwendung kommen. Sie können auch zusammen mit bis zu 15 Mol-% (berechnet auf Gesamt-Diisocyanat) eines Polyisocyanates verwendet werden, es darf aber höchstens soviel Polyisocyanat zugesetzt werden, dass ein noch thermoplastisch verarbeitbares Produkt entsteht. Beispiele für Polyisocyanate sind Triphenylmethan-4,4',4"-triisocyanat und Polyphenyl-polymethylen-polyisocyanate.

Als Polyesterdiole a) werden lineare Polyesterdiole eingesetzt. Produktionsbedingt enthalten diese oft kleine Mengen an nichtlinearen Verbindungen. Häufig spricht man daher auch von "im Wesentlichen linearen Polyolen". "Im Wesentlichen" lineare Polyesterdiole besitzen eine Funktionalität von 1,8 bis 2,2 und bevorzugt eine Funktionalität von 1,9 bis 2,1.

Normalerweise wird zur Synthese der TPU nur ein im Wesentlichen lineares Polyesterdiol eingesetzt. Es können jedoch auch Gemische von mehr als einen im Wesentlichen linearen Polyesterdiolen verwendet werden. Erfindungsgemäß einzusetzende Polyesterdiole oder auch Gemische mehrerer Polyesterdiole a) sind zu 40 - 100 Gew.-%, bevorzugt zu 90 - 100% Gew.-% und ganz besonders bevorzugt vollständig aus Bernsteinsäure und 1,3-Propandiol aufgebaut, wobei sich die Gew.-% Angaben auf das Gesamtgewicht der eingesetzten Polyesterdiole beziehen.

Bevorzugte Polyesterdiole bzw. Gemische aus Polyesterdiolen enthalten zu 40-100 Gew.-%, bevorzugt zu 90-100% Gew.-% (bezogen auf das Gesamtgewicht aller eingesetzten Polyesterdiole) Bernsteinsäure-1,3-propionat. Bernsteinsäure-1,3-propionat wird aus Bernsteinsäure und 1,3-Propandiol aufgebaut.

Die erfindungsgemäß einzusetzenden Polyesterdiole können neben Bernsteinsäure aus weiteren Dicarbonsäuren aufgebaut sein, beispielsweise aus Dicarbonsäuren mit 3 bis 12 Kohlenstoffatomen, vorzugsweise 4 bis 6 Kohlenstoffatomen, und mehrwertigen Alkoholen hergestellt werden. Als Dicarbonsäuren kommen beispielsweise in Betracht: aliphatische Dicarbonsäuren wie Glutarsäure, Adipinsäure, Korksäure, Azelainsäure und Sebacinsäure, oder aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Die erfindungsgemäßen Polyesterdiole können auch aus Gemischen mehrerer Polyesterdiole bestehen, wobei mindestens eines dieser Polyesterdiole ganz oder teilweise aus Bernsteinsäure und 1,3-Propandiol aufgebaut ist.

Bernsteinsäure kann auf petrochemischen Weg, beispielsweise unter Einsatz von Maleinsäure als Ausgangsverbindung, hergestellt werden oder aus biologischen Quellen stammen.

Beim Rückgriff auf biologische Quellen kommen Kohlehydrate in Betracht, die auf mikrobakteriellem Weg durch Fermentation in Bernsteinsäure umgewandelt werden, wie es beispielsweise in US-A 5,869,301 beschrieben ist.

Die erfindungsgemäß einzusetzenden Polyesterdiole können neben 1,3 - Propandiol aus weiteren mehrwertigen Alkoholen aufgebaut sein, beispielsweise aus Glykolen mit 2 bis 10, vorzugsweise 2 bis 6 Kohlenstoffatomen, z.B. Ethylenglykol, Diethylenglykol, 1,4-Butandiol, 1,5-Pentandiol, 1,6-Hexandiol, 1,10-Decandiol, 2,2-Dimethyl-1,3-propandiol, 2-Methylpropandiol-1,3, 3-Methylpentandiol-1,5 oder Dipropylenglykol. Die Alkohole können einzeln oder in Mischung verwendet werden.

Daneben können auch geringe Mengen von bis zu 3 Gew.-% an der Gesamtreaktionsmischung höherfunktionelle, niedermolekulare Polyole wie z.B. 1,1,1-Trimethylolpropan oder Pentaerythrit mitverwendet werden.

1,3-Propandiol kann nicht nur auf petrochemischem Weg, beispielsweise unter Einsatz von Acrolein als Ausgangsverbindung, hergestellt werden, sondern auch aus biologischen Quellen stammen. So wird beispielsweise 1,3-Propandiol bei der Firma DuPont Tate & Lyle fermentativ aus Maissirup im großtechnischen Maßstab gewonnen.

Bevorzugt ist die Verwendung ausschließlich bifunktioneller Ausgangsverbindungen zur Herstellung der Polyesterdiole.

Bevorzugte Polyesterdiole werden unter Verwendung von mindestens 90 Gew.-% biobasierter Bernsteinsäure (bezogen auf das Gesamtgewicht der eingesetzten Carbonsäure oder Bernsteinsäure) und/oder mindestens 90 Gew.-% biobasiertem 1,3-Propandiol (bezogen auf das Gesamtgewicht des eingesetzten Diols oder Propandiols) hergestellt. Ganz besonders bevorzugt ist die Verwendung von vollständig biobasierten Carbonsäuren bzw. Bernsteinsäure und vollständig biobasiertem 1,3-Propandiol.

Zur Herstellung der Polyesterdiole kann es gegebenenfalls vorteilhaft sein, anstelle der Dicarbonsäuren die entsprechenden Dicarbonsäurederivate, wie Carbonsäurediester mit 1 bis 4 Kohlenstoffatomen im Alkoholrest, beispielsweise Dimethylterephthalat oder Dimethyladipat, Carbonsäureanhydride, beispielsweise Bernsteinsäureanhydrid, Glutarsäureanhydrid oder Phthalsäureanhydrid, oder Carbonsäurechloride zu verwenden.

Daneben können auch geringe Mengen von bis zu 3 Gew.-% an der Gesamtreaktionsmischung höherfunktionelle, niedermolekulare Polyole wie z.B. 1,1,1-Trimethylolpropan oder Pentaerythrit mitverwendet werden.

Ebenso kann es beispielsweise beim Einsatz von Dimethylestern der Dicarbonsäuren infolge nicht ganz vollständiger Umesterung dazu kommen, dass geringe Mengen an nicht umgesetzten Methylesterendgruppen die Funktionalität der Polyester auf unter 2,0, beispielsweise auf 1,95 oder auch auf 1,90 verringern.

Die Polykondensation erfolgt auf den dem Fachmann bekannten Wegen, beispielsweise dadurch, dass man bei Temperaturen von 150 bis 270°C zunächst unter Normaldruck oder leicht vermindertem Druck das Reaktionswasser austreibt und im späteren Verlauf den Druck langsam absenkt, z.B. auf 5 bis 20 mbar. Ein Katalysator ist grundsätzlich nicht erforderlich, aber normalerweise sehr hilfreich. Beispielsweise kommen Zinn-II-Salze, Titan-IV-Verbindungen, Wismut-III-Salze und andere hierzu in Betracht.

Weiterhin kann es vorteilhaft sein, ein inertes Schleppgas, wie z.B. Stickstoff, zum Austreiben des Reaktionswassers zu verwenden. Daneben sind auch Methoden anwendbar, bei denen ein bei Raumtemperatur flüssiges Schleppmittel, beispielsweise Toluol, in einer Azeotropveresterung zum Einsatz kommt.

Die Polyesterdiole besitzen erfindungsgemäß zahlenmittlere Molekulargewichte M̅ₙ von 750 - 1800 g/mol, ebenfalls bevorzugt sind 850 -1800 g/mol, 900 bis 1800 g/mol und 900 bis 1100 g/mol.

Als Kettenverlängerungsmittel c) werden Diole, gegebenenfalls in Abmischung mit kleinen Mengen an Diaminen, mit einem Molekulargewicht von 60 bis 350 g/mol eingesetzt, vorzugsweise aliphatische Diole mit 2 bis 14 Kohlenstoffatomen, wie z.B. Ethandiol, 1,3-Propandiol, 1,6-Hexandiol, Diethylenglykol, Dipropylenglykol, Ethylenglykol und insbesondere 1,4-Als Kettenverlängerungsmittel c) werden Diole, gegebenenfalls in Abmischung mit kleinen Mengen an Diaminen, mit einem Molekulargewicht von 60 bis 350 g/mol eingesetzt, vorzugsweise aliphatische Diole mit 2 bis 14 Kohlenstoffatomen, wie z.B. Ethandiol, 1,3-Propandiol, 1,6-Hexandiol, Diethylenglykol, Dipropylenglykol, Ethylenglykol und insbesondere 1,4-Butandiol. Geeignet sind jedoch auch Diester der Terephthalsäure mit Glykolen mit 2 bis 4 Kohlenstoffatomen, z.B. Terephthalsäure-bis-ethylenglykol oder Terephthalsäure-bis-1,4-butandiol, Hydroxyalkylenether des Hydrochinons, z.B. 1,4-Di(β-hydroxyethyl)-hydrochinon, ethoxylierte Bisphenole, z.B. 1,4-Di(β-hydroxyethyl)-bisphenol A. Bevorzugt werden als Kettenverlängerer Ethandiol, 1,3-Propandiol , 1,4-Butandiol, 1,6-Hexandiol, 1,4-Di(β-hydroxyethyl)-hydrochinon verwendet. Es können auch Gemische der oben genannten Kettenverlängerer eingesetzt werden. Daneben können auch kleinere Mengen an Triolen zugesetzt werden.

Weiterhin können in geringen Mengen auch übliche monofunktionelle Verbindungen, z. B. als Kettenabbrecher oder Entformungshilfen, zugesetzt werden. Beispielhaft genannt seien Alkohole, wie Oktanol und Stearylalkohol oder Amine wie Butylamin und Stearylamin.

In den erfindungsgemäß verwendeten TPU ist der Zusatz von geringen Mengen von Kettenabbrecher vorteilhaft. Bevorzugt werden 0,01 bis 0,8 Gew.-% bezogen auf das Gesamtgewicht des TPU eingesetzt.

Zur Herstellung der TPU können die Aufbaukomponenten, gegebenenfalls in Gegenwart von Katalysatoren, Hilfsmitteln und/oder Zusatzstoffen in solchen Mengen zur Reaktion gebracht werden, dass das Äquivalenzverhältnis von NCO-Gruppen zur Summe der NCO-reaktiven Gruppen 0,9 : 1,0 bis 1,1 : 1,0, vorzugsweise 0,95 : 1,0 bis 1,02 : 1,0 beträgt.

Geeignete erfindungsgemäße Katalysatoren sind die nach dem Stand der Technik bekannten und üblichen tertiären Amine, wie z.B. Triethylamin, Dimethylcyclohexylamin, N-Methylmorpholin, N,N'-Dimethylpiperazin, 2-(Dimethylamino-ethoxy)ethanol, Diazabicyclo[2,2,2]octan und ähnliche sowie insbesondere organische Metallverbindungen wie Titansäureester, Eisenverbindungen oder Zinnverbindungen wie Zinndiacetat, Zinndioctoat, Zinndilaurat oder die Zinndialkylsalze aliphatischer Carbonsäuren wie Dibutylzinndiacetat oder Dibutylzinndilaurat oder ähnliche. Bevorzugte Katalysatoren sind organische Metallverbindungen, insbesondere Titansäureester, Eisen- und Zinnverbindungen. Die Gesamtmenge an Katalysatoren in den TPU beträgt in der Regel etwa 0 bis 5 Gew.-%, bevorzugt 0 bis 1 Gew.-%, bezogen auf TPU.

Neben den TPU-Komponenten und den Katalysatoren können auch Hilfsmittel und/oder Zusatzstoffe zugesetzt werden. Genannt seien beispielsweise Gleitmittel, wie Fettsäureester, deren Metallseifen, Fettsäureamide, Fettsäureesteramide und Siliconverbindungen, Antiblockmittel, Inhibitoren, Stabilisatoren gegen Hydrolyse, Licht, Hitze und Verfärbung, Flammschutzmittel, Farbstoffe, Pigmente, anorganische und/oder organische Füllstoffe und Verstärkungsmittel. Verstärkungsmittel sind insbesondere faserartige Verstärkungsstoffe wie z.B. anorganische Fasern, die nach dem Stand der Technik hergestellt werden und auch mit einer Schlichte beaufschlagt sein können. Bevorzugt können den TPU auch nanopartikuläre Feststoffe, wie z.B. Ruß in Mengen von 0 - 10 Gew.-% zugegeben werden. Nähere Angaben über die genannten Hilfs- und Zusatzstoffe sind der Fachliteratur, beispielsweise der Monographie von J.H. Saunders und K.C. Frisch "High Polymers", Band XVI, Polyurethane, Teil 1 und 2, Verlag Interscience Publishers 1962 bzw. 1964, dem Taschenbuch für Kunststoff-Additive von R.Gächter u. H.Müller (Hanser Verlag München 1990) oder der DE-A 29 01 774 zu entnehmen.

Weitere Zusätze, die in das TPU eingearbeitet werden können, sind Thermoplaste, beispielsweise Polycarbonate und Acrylnitril/Butadien/Styrol-Terpolymere, insbesondere ABS. Auch können andere Elastomere wie Kautschuk, Ethylen/Vinylacetatcopolymere, Styrol/Butadiencopolymere sowie andere TPU verwendet werden. Weiterhin zur Einarbeitung geeignet sind handelsübliche Weichmacher wie Phosphate, Phthalate, Adipate, Sebacate und Alkylsulfonsäureester.

Das TPU wird einstufig (gleichzeitige Zugabe der Reaktionskomponenten = one shot) oder mehrstufig (z.B. Prepolymerverfahren oder dem Weichsegmentvorverlängerungsverfahren gemäß EP-A 571 830) hergestellt.

In einem bevorzugten Herstellverfahren wird das erfindungsgemäß verwendete TPU mittels eines mehrstufigen Verfahrens umfassend Weichsegmentvorverlängerung hergestellt, wobei
A) ein oder mehrere im Wesentlichen lineare Polyesterdiole mit einer Funktionalität von 1,8 bis 2,2 mit einer Teilmenge 1 des organischen Diisocyanats oder der mehreren organischen Diisocyanate in einem molaren NCO/OH-Verhältnis von 1,1:1 bis 3,5:1, bevorzugt 1,3:1 bis 2,5:1 zu einem höhermolekularen isocyanat-terminierten Prepolymer ("NCO-Prepolymer") umgesetzt werden,
B) das in Stufe A) erhaltene Prepolymer abgemischt wird mit einer Teilmenge 2 des organischen Diisocyanats oder der mehreren organischen Diisocyanate, wobei die
C) das in Stufe B) erhaltene Gemisch mit einem oder mehreren Diol-Kettenverlängerern mit Molekulargewichten von 60 bis 350 umgesetzt wird,
wobei ein molares NCO:OH-Verhältnis aus den in A), B) und C) eingesetzten Komponenten von 0,9:1 bis 1,1:1 eingestellt wird und wobei die im Wesentlichen linearen Polyesterdiole a) ganz oder teilweise aus Bernsteinsäure und 1,3-Propandiol aufgebaut sind und ein mittleres Molekulargewicht von 750 bis 1800 g/mol aufweisen.

Vorzugsweise sind die organische Diisocyanate der in Schritt A) eingesetzten Teilmenge 1 die gleichen organische Diisocyanate wie bei der in Schritt B) eingesetzten Teilmenge 2. In einem zweiten bevorzugten Herstellverfahren werden
A) ein oder mehrere lineare Polyesterdiole mit einer Funktionalität von 1,8 bis 2,2 mit dem organischen Diisocyanat zu einem isocyanat-terminierten Prepolymer umgesetzt,
B) das in Stufe A) erhaltene Prepolymer mit einem oder mehreren Diol-Kettenverlängerern mit Molekulargewichten von 60 bis 350 umgesetzt,
wobei ein molares NCO:OH-Verhältnis aus den in A) und B) eingesetzten Komponenten von 0,9:1 bis 1,1:1 eingestellt wird wobei die im Wesentlichen linearen Polyesterdiole a) ganz oder teilweise aus Bernsteinsäure und 1,3-Propandiol aufgebaut sind und ein mittleres Molekulargewicht von 750 bis 1800 g/mol aufweisen.

In einem dritten bevorzugten Herstellverfahren werden ein oder mehrere lineare Polyesterdiole mit einer Funktionalität von 1,8 bis 2,2 mit dem organischen Diisocyanat, und gleichzeitig mit dem einem oder mehreren Diol-Kettenverlängerern mit Molekulargewichten von 60 bis 350 umgesetzt, wobei ein molares NCO:OH-Verhältnis aus den eingesetzten Komponenten von 0,9:1 bis 1,1:1 eingestellt wird und wobei die im Wesentlichen linearen Polyesterdiole a) ganz oder teilweise aus Bernsteinsäure und 1,3-Propandiol aufgebaut sind und ein mittleres Molekulargewicht von 750 bis 1800 g/mol aufweisen.

Unabhängig vom verwendeten Prozess wird das molare Verhältnis der NCO-Gruppen zu den OH-Gruppen insgesamt über alle Stufen auf 0,9 : 1 bis 1,1 : 1 eingestellt..

Zur Herstellung der TPU eignen sich die bekannten Mischaggregate, vorzugsweise die, die mit hoher Scherenergie arbeiten. Für die kontinuierliche Herstellung seien beispielhaft genannt Zur Herstellung der TPU eignen sich die bekannten Mischaggregate, vorzugsweise die, die mit hoher Scherenergie arbeiten. Für die kontinuierliche Herstellung seien beispielhaft genannt Cokneter, vorzugsweise Extruder, wie z.B. Zweiwellenextruder und Busskneter, oder Statikmischer.

Die erfindungsgemäßen TPU werden erfindungsgemäß durch die gängigen thermischen Umformverfahren von Kunststoffen, z.B. mittels Schmelzeextrusion, zu homogenen Extrusionsartikeln, insbesondere Folien (Flachfilm - oder Blasfolienextruder), Schläuche, Kabel, Profile verarbeitet.

Die Extrusionsverarbeitung zeichnet sich durch ein schonendes Aufschmelzen des TPU's in einer Aufschmelzschnecke, oft eine eingängige Dreizonenschnecke, und einer Formgebung durch ein entsprechendes Extrusionswerkzeug (Düse) aus. Eine Verarbeitung in einem unteren Temperaturbereich lässt eine hohe Formstabilität erreichen, wobei die Masse-Temperaturen von der Härte und dem Produkttyp abhängen. Sie liegen im allgemeinen im Bereich von 160 bis 230°.C . Bei diesen schonenden Bedingungen ist das homogene Aufschmelzen besonders wichtig und im Wesentlichen von der TPU-Produktcharakteristik bestimmt. Wenn dieses Aufschmelzen nicht homogen erfolgt, hat das im allgemeinen optische und technische Defizite in den Extrudaten (Stippen, Löcher), die zu einem Verarbeitungsabbruch führen

Allgemein beschrieben werden solche Extrusionsverfahren im Polyurethane Handbook (Hanser Verlag ; edited by G.Oertel; Seite 426).

Durch die Verwendung der oben beschriebenen TPU lassen sich homogene Extrusionsartikel herstellen, welche ganz oder teilweise auf biologisch herstellbaren Komponenten basieren können.

### Beispiele

### Herstellung der TPU :

In einem Reaktionsgefäß wurde gemäß Tabelle 1 jeweils ein Polyol vorgelegt. Darin gelöst wurden jeweils Bis-ethylenstearylamid (0,3 Gew% bezogen TPU) und Stabaxol 1-LF (monmeres Carbodiimid der Firma Rhein-Chemie / 1 Gew% bezogen Polyol). Nach dem Aufheizen auf 180°C wurde die Teilmenge 1 des 4,4'-Diphenylmethandiisocyanates (MDI) unter Rühren zugesetzt und die Prepolymerreaktion (prep) mit Hilfe von 50 ppm (bezogen auf die Polyolmenge) Katalysator Zinndioctoat zu einem Umsatz von größer 90 mol% (Bestimmung durch Titration der verbleibenden NCO-Gruppen), bezogen auf das Polyol gebracht.

Nach beendeter Reaktion wurde unter Rühren die Teilmenge 2 des MDIs zugeführt. Anschließend gab man die in der Tabelle 1 angegebene Menge Kettenverlängerer 1,4-Butandiol zu, wobei das NCO/OH-Verhältnis aller Komponenten bei 1,00 lag. Bei der sogenannten one shot-Dosierung (os) wurden alle Polyurethan-Komponenten gleichzeitig zugegeben

Nach intensiver Durchmischung wurde das TPU-Reaktionsgemisch auf ein Blech ausgegossen und 30 Minuten bei 120°C getempert. Die Gießplatten wurden geschnitten und granuliert.
Polyole: BP = Polyesterdiole auf Basis von Bernsteinsäure-1,3-propionat
SP = Polyesterdiole auf Basis von Sebacinsäure-1,3-propionat, Sebacinsäure-1,3-propionat wird aus Sebacinsäure und 1,3-Propandiol aufgebaut

**Tabelle 1**

| **Bsp** | **Polyol** | **Polyol Molgewicht Mn** | **Polyol Menge (mol)** | **MDI Teilmenge 1 (mol)** | **MDI Teilmenge 2 (mol)** | **Butandiol (mol)** | **Dosierverfahren** |
|---|---|---|---|---|---|---|---|
| **1** | **BP** | **1080** | **1,00** | **2,78** | **0,06** | **1,84** | **prep** |
| **2** | **BP** | **1080** | **1,00** | **2,78** | **0,82** | **2,60** | **prep** |
| | | | | | | | |
| | | | | | | | |
| | | | | | | | |
| | | | | | | | |
| **3*** | **SP** | **2000** | **1,00** | **4,41** | **0** | **3,41** | **prep** |

| | | | | | | | |
|---|---|---|---|---|---|---|---|
| ***nicht erfindungsgemäßes Vergleichsbeispiel** | | | | | | | |

### Herstellung von Spritzgussteilen:

Das erhaltene TPU-Granulat wurde in einer Spritzgießmaschine Allrounder 470 S (30 mm-Schnecke) der Firma Arburg aufgeschmolzen und zu S1-Stäben (Formtemperatur: 25°C; Stabgröße: 1 15x25/6x2), Platten (Formtemperatur: 25°C; Größe: 125x50x2 mm) oder RundStopfen (Formtemperatur: 25°C; Durchmesser 30mm, Dicke 6 mm) geformt.

### Folienverarbeitung:

Das Granulat wurde in einem Einwellen-Extruder 30/25D (Plasticorder PL 2000 6 der Firma Brabender) aufgeschmolzen (Dosierung 3 kg/h; 170-235 °C) und durch einen Flachfilmkopf zu einem Flachfilm extrudiert

### Messungen

Die Messung der Härte erfolgte nach ISO 868 an den oben genannten Rundstopfen. Die Messungen im Zugversuch erfolgten nach ISO 527-1,-3 an S1-Stäben und ergaben 100%-Modul, Reißfestigkeit u. Dehnung .

### Dynamisch-mechanische Analyse (DMA) über die Temperatur

Es wurde jeweils eine dynamisch-mechanische Messung eines aus der Spritzgießplatte gestanzten Prüfkörpers (50 mm x 12 mm x 2 mm) im Elastizitätsschwingversuch (1 Hz) über die Temperatur analog DIN 53 445 durchgeführt. Die Messungen wurden mit dem DMS6100 der Firma Seiko mit 1 Hz im Temperaturbereich von -125°C bis 250°C mit einer Heizrate von 2°C/min durchgeführt. Zur Charakterisierung des erfindungsgemäßen Erweichungsverhaltens ist in der Tabelle 2 der Glaspunkt Tg angegeben. Dieser wurde aus dem Maximum der Verlustmodulkurve bestimmt. In folgender Tabelle 2 sind die gemessenen Eigenschaften der Beispiele beschrieben:

| **Beispiel** | **Härte Shore A** | **100% Modul MPa** | **Reißfestigkeit MPa** | **Reißdehnung %** | **Glaspunkt DMA °C** | **Extrusion Flachfilm** |
|---|---|---|---|---|---|---|
| **1** | 91 | 13 | 40 | 476 | 2 | gut |
| **2** | 94 | 22 | 41 | 434 | 11 | gut |
| | | | | | | |
| | | | | | | |
| | | | | | | |
| | | | | | | |
| **3*** | 90 | 8 | 45 | 516 | -39 | schlecht |

| | | | | | | |
|---|---|---|---|---|---|---|
| ***nicht erfindungsgemäßes Vergleichsbeispiel** | | | | | | |

Man erkennt , dass die erfidungsgemäßen Bernsteinsäure-1,3-propionat basierten TPU, hergestellt nach verschiedenen Dosierverfahren , einen erhöhten Glaspunkt und damit eine gute Extrusionsfähigkeit besitzen.

## Patentansprüche

1. Verwendung von thermoplastisch verarbeitbaren Polyurethanelastomeren mit einer Härte von 65 bis 95ShoreA, bestimmt nach ISO868, welche erhältlich sind aus den Komponenten
a) ein oder mehrere im Wesentlichen lineare Polyesterdiole mit einer Funktionalität von 1,8 bis 2,2,
b) ein oder mehrere organische Diisocyanate,
c) eine oder mehrere Diole mit Molekulargewichten von 60 bis 350 g/mol,
wobei ein molares NCO : OH-Verhältnis von 0,9 : 1 bis 1,1 : 1 eingestellt wird,
und **dadurch gekennzeichnet sind, dass** die im Wesentlichen linearen Polyesterdiole a) ganz oder teilweise aus Bernsteinsäure und 1,3-Propandiol aufgebaut sind und ein mittleres Molekulargewicht von 750 bis 1800 g/mol aufweisen, für Extrusionsartikel.

2. Extrusionsartikel aus thermoplastisch verarbeitbaren Polyurethanelastomere mit einer Härte von 65 bis 95ShoreA, bestimmt nach ISO868, welche erhältlich sind aus den Komponenten
a) ein oder mehrere im Wesentlichen lineare Polyesterdiole mit einer Funktionalität von 1,8 bis 2,2,
b) ein oder mehrere organische Diisocyanate,
c) eine oder mehrere Diole mit Molekulargewichten von 60 bis 350 g/mol,
wobei ein molares NCO : OH-Verhältnis von 0,9 : 1 bis 1,1 : 1 eingestellt wird,
und **dadurch gekennzeichnet sind, dass** die im Wesentlichen linearen Polyesterdiole a) ganz oder teilweise aus Bernsteinsäure und 1,3-Propandiol aufgebaut sind und ein mittleres Molekulargewicht von 750 bis 1800 g/mol aufweisen.

3. Extrusionsartikel aus thermoplastisch verarbeitbaren Polyurethanelastomere nach einem der vorangehenden Ansprüche, **dadurch gekennzeichnet, dass** mindestens eine der Komponenten a) und c) ganz oder teilweise biologisch erzeugt sind.

4. Extrusionsartikel aus thermoplastisch verarbeitbaren Polyurethanelastomeren nach einem der vorangehenden Ansprüche, **dadurch gekennzeichnet, dass** das organische Diisocyanat b) aus einem oder mehreren Isocyanaten der Gruppe enthaltend 4,4'-Diphenylmethandiisocyanat, Isophorondiisocyanat, Dicyclohexylmethan-4,4-diisocyanat, 1,6-Hexamethylendiisocyanat oder 1,5-Naphthylendiisocyanat ausgewählt wird.

5. Extrusionsartikel aus thermoplastisch verarbeitbaren Polyurethanelastomeren nach einem der vorangehenden Ansprüche, **dadurch gekennzeichnet, dass** der Diol-Kettenverlängerer c) aus einem oder mehreren Kettenverlängerern der Gruppe enthaltend 1,4-Butandiol, 1,3-Propandiol, 1,2-Ethylenglykol, 1,6 Hexandiol ausgewählt ist.

6. Extrusionsartikel aus thermoplastisch verarbeitbaren Polyurethanelastomeren nach einem der vorangehenden Ansprüche, **dadurch gekennzeichnet, dass** die in dem Polyesterdiol verwendete Bernsteinsäure biologisch durch Fermentation von Kohlehydraten hergestellt ist.

7. Extrusionsartikel aus thermoplastisch verarbeitbaren Polyurethanelastomeren nach einem der vorangehenden Ansprüche, **dadurch gekennzeichnet, dass** das in dem Polyesterdiol verwendete 1,3-Propanidol biologisch durch Fermentation von Kohlehydraten hergestellt ist.

8. Extrusionsartikel aus thermoplastisch verarbeitbaren Polyurethanelastomeren nach einem der vorangehenden Ansprüche, **dadurch gekennzeichnet, dass** der Diol-Kettenverlängerer ein biologisch erzeugtes 1,3-Propandiol enthält.

9. Verfahren zur Herstellung eines Extrusionsartikels gemäß einem der Ansprüche 2 bis 8 durch Extrusion eines thermoplastisch verarbeitbaren Polyurethanelastomeren mit einer Härte von 65 bis 95ShoreA, bestimmt nach ISO868, welches erhältlich ist aus den Komponenten
a) ein oder mehrere im Wesentlichen lineare Polyesterdiole mit einer Funktionalität von 1,8 bis 2,2,
b) ein oder mehrere organische Diisocyanate,
c) eine oder mehrere Diole mit Molekulargewichten von 60 bis 350 g/mol,
wobei ein molares NCO : OH-Verhältnis von 0,9 : 1 bis 1,1 : 1 eingestellt wird,
und **dadurch gekennzeichnet ist, dass** die im Wesentlichen linearen Polyesterdiole a) ganz oder teilweise aus Bernsteinsäure und 1,3-Propandiol aufgebaut sind und ein mittleres Molekulargewicht von 750 bis 1800 g/mol aufweisen.

## Claims

1. Use of thermoplastically processable polyurethane elastomers with hardness from 65 to 95 Shore A, determined in accordance with ISO 868, these being obtainable from the following components:
a) one or more substantially linear polyesterdiols with functionality from 1.8 to 2.2,
b) one or more organic diisocyanates,
c) one or more diols with molar masses from 60 to 350 g/mol,
where the molar NCO : OH ratio is set at from 0.9 : 1 to 1.1 : 1,
and **characterized in that** the substantially linear polyesterdiols a) are composed entirely or to some extent of succinic acid and of 1, 3-propanediol and have an average molar mass of from 750 to 1800 g/mol, for extruded items.

2. Extruded item made of thermoplastically processable polyurethane elastomers with hardness from 65 to 95 Shore A, determined in accordance with ISO 868, these being obtainable from the following components:
a) one or more substantially linear polyesterdiols with functionality from 1.8 to 2.2,
b) one or more organic diisocyanates,
c) one or more diols with molar masses from 60 to 350 g/mol,
where the molar NCO : OH ratio is set at from 0.9 : 1 to 1.1 : 1,
and **characterized in that** the substantially linear polyesterdiols a) are composed entirely or to some extent of succinic acid and of 1,3-propanediol and have an average molar mass of from 750 to 1800 g/mol.

3. Extruded item made of thermoplastically processable polyurethane elastomers according to either of the preceding claims, **characterized in that** at least one of components a) and c) has been produced entirely or to some extent biologically.

4. Extruded item made of thermoplastically processable polyurethane elastomers according to any of the preceding claims, **characterized in that** the organic diisocyanate b) is selected from one or more isocyanates from the group consisting of diphenylmethane 4,4'-diisocyanate, isophorone diisocyanate, dicyclohexylmethane 4,4-diisocyanate, hexamethylene 1,6-diisocyanate, and naphthylene 1,5-diisocyanate.

5. Extruded item made of thermoplastically processable polyurethane elastomers according to any of the preceding claims, **characterized in that** the diol chain extender c) has been selected from one or more chain extenders from the group consisting of 1,4-butanediol, 1,3-propanediol, ethylene 1,2-glycol, 1,6-hexanediol.

6. Extruded item made of thermoplastically processable polyurethane elastomers according to any of the preceding claims, **characterized in that** the succinic acid used in the polyesterdiol has been produced biologically via fermentation of carbohydrates.

7. Extruded item made of thermoplastically processable polyurethane elastomers according to any of the preceding claims, **characterized in that** the 1,3-propanediol used in the polyesterdiol has been produced biologically via fermentation of carbohydrates.

8. Extruded item made of thermoplastically processable polyurethane elastomers according to any of the preceding claims, **characterized in that** the diol chain extender comprises a biologically produced 1,3-propanediol.

9. Process for the production of an extruded item according to any of Claims 2 to 8 via extrusion of a thermoplastically processable polyurethane elastomers with hardness from 65 to 95 Shore A, determined in accordance with ISO 868, these being obtainable from the following components:
a) one or more substantially linear polyesterdiols with functionality from 1.8 to 2.2,
b) one or more organic diisocyanates,
c) one or more diols with molar masses from 60 to 350 g/mol,
where the molar NCO : OH ratio is set at from 0.9 : 1 to 1.1 : 1,
and **characterized in that** that the substantially linear polyesterdiols a) are composed entirely or to some extent of succinic acid and of 1,3-propanediol and have an average molar mass of from 750 to 1800 g/mol.

## Revendications

1. Utilisation d'élastomères de polyuréthane usinables thermoplastiquement ayant une dureté de 65 à 95 Shore A, déterminée selon ISO 868, qui peuvent être obtenus à partir des composants suivants :
a) un ou plusieurs polyester-diols essentiellement linéaires ayant une fonctionnalité de 1,8 à 2,2,
b) un ou plusieurs diisocyanates organiques,
c) un ou plusieurs diols ayant des poids moléculaires de 60 à 350 g/mol,
un rapport molaire NCO:OH de 0,9:1 à 1,1:1 étant ajusté,
et qui sont **caractérisés en ce que** les polyester-diols essentiellement linéaires a) sont formés en totalité ou en partie à partir d'acide succinique et de 1,3-propanediol, et présentent un poids moléculaire moyen de 750 à 1 800 g/mol, pour des articles extrudés.

2. Article extrudé en élastomères de polyuréthane usinables thermoplastiquement ayant une dureté de 65 à 95 Shore A, déterminée selon ISO 868, qui peuvent être obtenus à partir des composants suivants :
a) un ou plusieurs polyester-diols essentiellement linéaires ayant une fonctionnalité de 1,8 à 2,2,
b) un ou plusieurs diisocyanates organiques,
c) un ou plusieurs diols ayant des poids moléculaires de 60 à 350 g/mol,
un rapport molaire NCO:OH de 0,9:1 à 1,1:1 étant ajusté,
et qui sont **caractérisés en ce que** les polyester-diols essentiellement linéaires a) sont formés en totalité ou en partie à partir d'acide succinique et de 1,3-propanediol, et présentent un poids moléculaire moyen de 750 à 1 800 g/mol.

3. Article extrudé en élastomères de polyuréthane usinables thermoplastiquement selon l'une quelconque des revendications précédentes, **caractérisé en ce qu'**au moins un des composants a) et c) est généré biologiquement en totalité ou en partie.

4. Article extrudé en en élastomères de polyuréthane usinables thermoplastiquement selon l'une quelconque des revendications précédentes, **caractérisé en ce que** le diisocyanate organique b) est choisi parmi un ou plusieurs isocyanates du groupe contenant le diisocyanate de 4,4'-diphénylméthane, le diisocyanate d'isophorone, le 4,4-diisocyanate de dicyclohexylméthane, le diisocyanate de 1,6-hexaméthylène ou le diisocyanate de 1,5-naphtylène.

5. Article extrudé en élastomères de polyuréthane usinables thermoplastiquement selon l'une quelconque des revendications précédentes, **caractérisé en ce que** l'allongeur de chaînes diol c) est choisi parmi un ou plusieurs allongeurs de chaînes du groupe contenant le 1,4-butanediol, le 1,3-propanediol, le 1,2-éthylène glycol, le 1,6-hexanediol.

6. Article extrudé en élastomères de polyuréthane usinables thermoplastiquement selon l'une quelconque des revendications précédentes, **caractérisé en ce que** l'acide succinique utilisé dans le polyester-diol est fabriqué biologiquement par fermentation d'hydrates de carbone.

7. Article extrudé en élastomères de polyuréthane usinables thermoplastiquement selon l'une quelconque des revendications précédentes, **caractérisé en ce que** le 1,3-propanediol utilisé dans le polyester-diol est fabriqué biologiquement par fermentation d'hydrates de carbone.

8. Article extrudé en élastomères de polyuréthane usinables thermoplastiquement selon l'une quelconque des revendications précédentes, **caractérisé en ce que** l'allongeur de chaînes diol contient un 1,3-propanediol généré biologiquement.

9. Procédé de fabrication d'un article extrudé selon l'une quelconque des revendications 2 à 8 par extrusion d'un élastomère de polyuréthane usinable thermoplastiquement ayant une dureté de 65 à 95 Shore A, déterminée selon ISO 868, qui peut être obtenu à partir des composants suivants :
a) un ou plusieurs polyester-diols essentiellement linéaires ayant une fonctionnalité de 1,8 à 2,2,
b) un ou plusieurs diisocyanates organiques,
c) un ou plusieurs diols ayant des poids moléculaires de 60 à 350 g/mol,
un rapport molaire NCO:OH de 0,9:1 à 1,1:1 étant ajusté,
et qui est **caractérisé en ce que** les polyester-diols essentiellement linéaires a) sont formés en totalité ou en partie à partir d'acide succinique et de 1,3-propanediol, et présentent un poids moléculaire moyen de 750 à 1 800 g/mol.
